# EUROPÄISCHE PATENTSCHRIFT

(11) **EP 0 416 143 B1**
(45) Veröffentlichungstag und Bekanntmachung des Hinweises auf die Patenterteilung: **25.01.1995**
(21) Anmeldenummer: 89116321.4
(22) Anmeldetag: 04.09.1989
(51) Int. Cl.: G21C 19/30, C01B 3/58, B01D 53/46, B01J 12/00

(54) **Vorrichtung zur Entfernung von Wasserstoff und Auflösung von Sperrschichten**
Device for the removal of hydrogen and dissolution of barrier layers
Dispositif d'élimination de l'hydrogène et dissolution des couches d'étanchement

(43) Veröffentlichungstag der Anmeldung: 13.03.1991
(73) Patentinhaber: Gesellschaft für Reaktorsicherheit (GRS) mbH, 50667 Köln (DE)
(72) Erfinder: Chakraborty, Amiya Kumar, Dr., D-5042 Erftstadt (DE)
(74) Vertreter: Hoffmann, Eckart, Dipl.-Ing.

(56) Entgegenhaltungen:
- EP-A- 0 303 144
- DE-A- 3 604 416
- DE-A- 3 725 290
- US-A- 4 228 132

## Beschreibung

Die Erfindung betrifft eine Vorrichtung nach dem Oberbegriff des Patentanspruchs 1.

Eine solche Vorrichtung ist aus der DE-A-36 04 416 bekannt. Wie in dieser Druckschrift ausführlich dargelegt, tritt das Problem, Wasserstoff aus einem Gasgemisch zu beseitigen, insbesondere bei Kernreaktorunfällen auf, bei denen Wasserstoff in die sauerstoffhaltige Atmosphäre des Sicherheitsbehälters oder eines Druckabbausystems des Kernreaktors austritt und infolgedessen Explosionsgefahr besteht. Zur Beseitigung des Wasserstoffs macht die bekannte Vorrichtung von Metallen Gebrauch, die eine hohe Aufnahmefähigkeit für Wasserstoff, auch bei geringem Wasserstoffpartialdruck im Gasgemisch aufweisen. Zur Verhinderung von Oxidation sind die Metalle mit einer wasserstoffdurchlässigen Schutzschicht überzogen. Dabei kann für die Schutzschicht ein Material verwendet werden, das als Katalysator für die Oxidation von Wasserstoff mit Sauerstoff zu Wasser wirkt.

Das Wasserstoff aufnehmende Metall kann entweder selbsttragend oder als Schicht auf einer Trägeranordnung ausgebildet sein. Für Zwecke des Einsatzes als Sicherheitsvorrichtung, die nur im Störungsfall benötigt wird, ist bei der bekannten Vorrichtung vorgesehen, daß die mit der gegebenenfalls katalysierenden Schutzschicht versehene Trägeranordnung innnerhalb eines geschlossenen Behälters untergebracht ist, der erst im Störungsfall, etwa druckabhängig, geoffnet wird. Bei einer Ausführungsform der bekannten Vorrichtung weist dieser Behälter an seinem oberen und seinem unteren Ende je eine Berstscheibe auf, die sich im Störungsfall ablösen. Innerhalb des Behälters befindet sich ein Paket aus den beschichteten, Wasserstoff aufnehmenden Metallen. Das umgebende Gasgemisch strömt nach Ablösen der Berstscheiben in den Behälter ein, wobei in dem Behälter eine konvektive Gasströmung vom Boden des Behälters zum Kopf entsteht. Zur Verstärkung dieser Gasstromung verengt sich der Strömungsquerschnitt im Kopf des Behälters.

Bei einer anderen Ausführungsform der bekannten Vorrichtung ist eine Folie aus dem beschichteten, Wasserstoff aufnehmenden Metall aufgerollt in einem Behälter angeordnet. Der Behälter ist an einer Decke aufgehängt und offnet sich im Storungsfall, so daß die aufgerollte Folie abrollen kann und eine große Kontaktfläche mit dem Gasgemisch entsteht.

Eine ähnliche Vorrichtung ist aus der DE-A-37 25 290 bekannt. Diese Druckschrift offenbart ein als Katalysator besonders gut geeignetes Material, mit dem eine netz- oder blechartige Trägeranordnung ein- oder beidseitig beschichtet ist. Die beschichtete Trägeranordnung ist gefaltet oder aufgerollt in einem gasdichten Behälter enthalten, das sich erst im Störungsfall öffnet, so daß sich dann die Trägeranordnung entfalten oder abrollen kann. Die in dieser Druckschrift offenbarten Träger- und Katalysatormaterialien sind auch im Rahmen der vorliegenden Erfindung gut geeignet.

Berechnungen zum Ablauf eines Kernschmelzunfalls am Beispiel der Anlage Biblis B deuten darauf hin, daß die Freisetzung von Wasserstoff mit der Freisetzung von geringen Mengen von CO₂ und CO einhergeht (vgl. K. Bracht und M. Tiltmann, "Analysen zum Kernschmelzunfall infolge eines nicht beherrschten großen Lecks in einer Hauptkühlmittelleitung", GRS-A-906, Dezember 1983). Aus dem gleichen Bericht geht hervor, daß eine erhebliche Menge von Dampf während des Unfalls freigesetzt wird. Der Dampf liegt teilweise in unterkühltem und teilweise in überhitztem Zustand vor. Bedingt durch die unterschiedlichen Gewichtsverhältnisse der vorhandenen Gaskomponenten wie Luft, Wasserstoff, Dampf, CO, CO₂ können Sperrschichten mit der Gefahr einer lokalen Konzentrationserhöhung des Wasserstoffs gebildet werden. Das damit verbundene Problem einer möglichen Verbrennung eines Wasserstoff-Luft-Gemisches läßt sich wegen der lokalen hohen Wasserstoffkonzentrationen mit Hilfe der eingangs beschriebenen bekannten Vorrichtungen zur Entfernung von Wasserstoff nicht beherrschen.

Aufgabe der Erfindung ist es daher, eine Vorrichtung zur Entfernung von Wasserstoff gemäß der eingangs angegebenen Art so auszugestalten, daß gegebenenfalls auftretende Sperrschichten und damit verbundene lokale Wasserstoffkonzentrationen aufgelöst werden.

Diese Aufgabe wird erfindungsgemäß durch die kennzeichnenden Merkmale des Patentanspruchs 1 gelöst.

Vorteilhafte Weiterbildungen der Erfindung sind in den Unteransprüchen gekennzeichnet.

Die Erfindung macht sich die an sich bekannte Tatsache zunutze, daß sich bei den bekannten Vorrichtungen zur Entfernung von Wasserstoff aufgrund der Katalysationswärme eine Konvektionsstromung einstellt. Werden mehrere Katalysatoranordnungen innerhalb eines geschlossenen Raums, vorwiegend also eines Sicherheitsbehälters eines Kernkraftwerkes, in geeigneter Weise horizontal und vertikal gegeneinander versetzt angeordnet, dann treten horizontale und vertikale Luftströmungen auf, die die Atmosphäre des gesamten Raumes durchmischen und dabei gegebenenfalls vorhandene Sperrschichten auflösen bzw. solche nicht erst entstehen lassen. Der dabei einigermaßen gleichmäßig verteilte Wasserstoff wird von den Katalysatoranordnungen aufgenommen und damit die Gefahr von Detonationen beseitigt.

Ausführungsbeispiele der Erfindung werden nachfolgend anhand der schematischen Zeichnungen näher erläutert. Es zeigen:
- Fig. 1: Eine erste Ausführungsform der Erfindung in einem Bereitschaftszustand,
- Fig. 2: die erste Ausführungsform der Erfindung im Be triebszustand,
- Fig. 3: einen Teil einer zweiten Ausführungsform der Erfindung in einem Bereitschaftszustand,
- Fig. 4 und 5: Einzelheiten zur Erläuterung der zweiten Ausführungsform der Erfindung,
- Fig. 6: eine dritte Ausführungsform der Erfindung in einem Bereitschaftszustand,
- Fig. 7: die dritte Ausführungsform der Erfindung im Be triebszustand und
- Fig. 8: eine vergrößerte Darstellung einer Katalysatoran ordnung der dritten Ausführungsform der Erfindung.
- Fig. 9: eine weiter vergrößerte Detaildarstellung von Fig. 8, teilweise im Schnitt

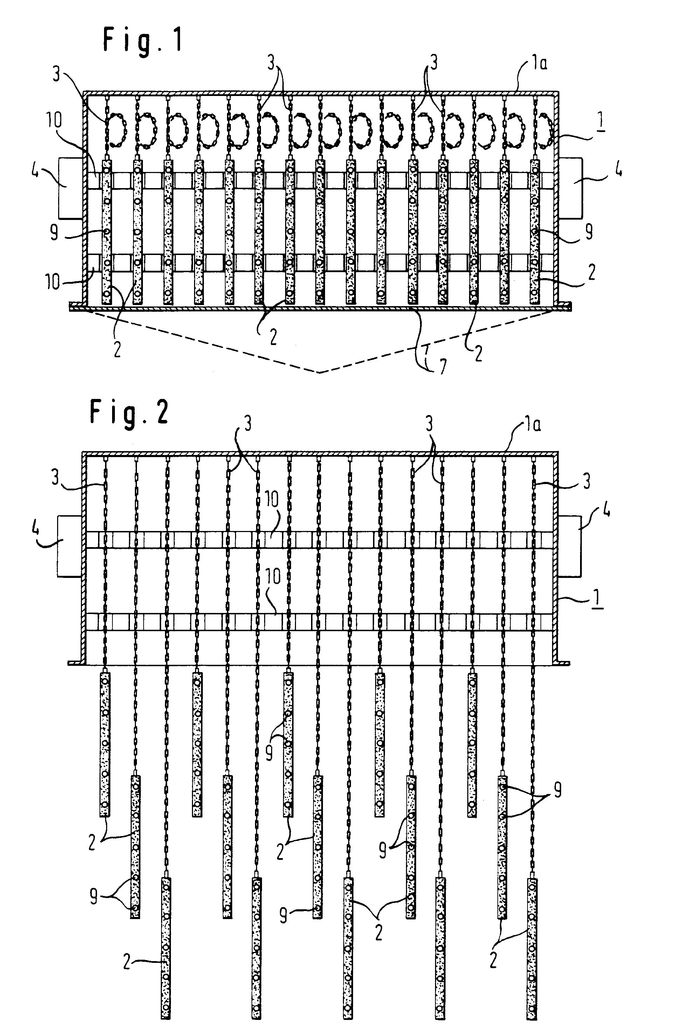

Anhand der Fig. 1 und 2 sei zunächst eine erste Ausführungsform der erfindungsgemäßen Vorrichtung beschrieben. Gemäß Darstellung in Fig. 1 enthält die Vorrichtung einen im Bereitschaftszustand gasdichten Behälter 1 kastenförmiger Gestalt. Die schematische Darstellung in Fig. 1 zeigt eine Seitenansicht des Behälters mit entfernter Seitenwand. Je nach Größe und sonstigen Gegebenheiten des Raumes, in dem die Vorrichtung verwendet werden soll, sind ein oder mehrere solcher Behälter 1 mit dem noch beschriebenen Inhalt vorgesehen und vorzugsweise an der Decke befestigt.

In dem Behälter befinden sich Katalysatorplatten 2. Sie sind mittels flexibler Tragmittel, vorzugsweise Metallketten 3, an der Decke 1a des Behälters befestigt. Die Ketten 3 verschiedener Katalysatorplatten 2 sind unterschiedlich lang, wie sich aus der Darstellung in Fig. 2 ergibt. In dem Bereitschaftszustand gemäß Fig. 1 sind die Katalysatorplatten 2 durch an den gegenüberliegenden Seitenwänden des Behälters 1 angebrachte Führungen 10 so im Abstand gehalten, daß sie auch bei stärkeren Vibrationen nicht miteinander in Berührung kommen und sich gegenseitig beschädigen können. Diese Führungen gewährleisten zugleich bei Öffnen des Bodens 7 des Behälters 1 ein kontrolliertes Hinausfallen der Katalysatorplatten 2 aus dem Behälter.

Der Boden 7 des Behälters 1 kann, wie in Fig. 1 gestrichelt dargestellt, eine von einer geraden Platte abweichende Form aufweisen, die zur Folge hätte, daß bereits im Bereitschaftszustand die Katalysatorplatten 2 sich in etwas unterschiedlichen Höhen befinden und deshalb von unterschiedlichen Ausgangspositionen aus nach unten fallen. Dies kann dazu beitragen, daß beim Öffnen des Behälters und Heraus fallen der Katalysatorplatten 2 kein gegenseitiges Anschlagen der Platten aneinander mit der Folge einer möglichen Beschädigung auftritt.

Der Boden des Behälters 7 löst sich druck- oder vorzugsweise temperaturabhängig. Bei Einsatz in einem Sicherheitsbehälter eines Kernkraftwerkes tritt im Störungsfall eine Temperaturerhöhung auf, die als das auslösende Moment zum Öffnen des Behälters 1 dienen kann. Verschiedene Arten von Temperatursensoren einschließlich Bimetallen kommen als Auslöser zum Öffnen des Bodens 7 des Behälters 1 in Betracht.

Fig. 2 zeigt den Betriebszustand der Vorrichtung mit vertikal und horizontal gegeneinander versetzt an den Ketten 3 hängenden Katalysatorplatten 2. Die Katalysatorplatten bestehen vorzugsweise aus einem Trägerblech, das beidseitig mit der Katalysatorsubstanz beschichtet ist. Als Materialen für das Trägerblech und die Katalysatorsubstanz kommen die aus dem Stand der Technik, insbesondere der DE-A-3725290, bekannten Materialen in Betracht. Aufgrund der versetzten Anordnung der Katalysatorplatten treten Konvektionsströme mit vertikalen und horizontalen Komponenten auf, die bei entsprechender Verteilung der gegeneinander versetzten Katalysatorplatten über den Raum eine ausreichende Durchmischung der Atmosphäre im Raum bewirken und dadurch gegebenenfalls schon vorhandene Sperrschichten auflösen bzw. solche am Entstehen hindern. Diese Wirkung der Katalysatorplatten kann durch Bohrungen 9 noch verstärkt werden, die sich horizontal verlaufend in Längsrichtung der Katalysatorplatten durch diese hindurch erstrecken und Strömungskomponenten senkrecht zur Zeichenebene der Fig. 2 hervorrufen.

An dem Behälter 1 kann ein oder können mehrere Zusatzbehälter 4 vorgesehen sein, die jeweils über ein Ventil mit dem Inneren des Behälters 1 verbunden sind. In diesen Zusatzbehältern 4 befinden sich Proben der beschichteten Katalysatorplatten aus demselben Produktionslos. In regelmäßigen Abständen kann aus solchen Zusatzbehältern eine Probe entnommen und daraufhin untersucht werden, ob noch eine ausreichende Katalysationsfähigkeit vorhanden ist. Beim Öffnen eines solchen Zusatzbehälters wird automatisch das die Verbindung zum Inneren des Behälters 1 herstellende Ventil verschlossen, so daß die vorzugsweise unter einem leichten Überdruck stehende Schutzatmosphäre innerhalb des Behälters 1 erhalten bleibt.

Die bei dem voranstehend beschriebenen Ausführungbeispiel und auch bei den folgenden Ausführungsbeispielen beschriebene Aufbewahrung der eigentlichen Katalysatoranordnungen in einem Bereitschaftszustand in einem geschlossenen Behälter ist nicht unbedingt in allen Fällen notwendig. Notwendig oder zumindest zweckmäßig ist dies dann, wenn die eigentliche Funktion der Vorrichtung, nämlich Wasserstoff zu beseitigen, erst in einem Störungsfall genutzt werden soll, der zu einem unbestimmten Zeitpunkt eintreten kann, und die bis zu diesem Störungsfall in dem Raum vorhandene Atmosphäre über längere Zeit eine Beeinträchtigung der Funktionsfähigkeit der Katalysatorplatten haben kann. Ist eine solche Funktionsbeeinträchtigung auch über längere Zeit im Einzelfall nicht zu befürchten, dann können die einzelnen Katalysatorplatten 2 in entsprechender Anordnung, wie in Fig. 2 dargestellt, auch direkt an der Decke des Raums aufgehängt werden. Entsprechendes gilt für die nachfolgend beschriebenen Ausführungsformen.

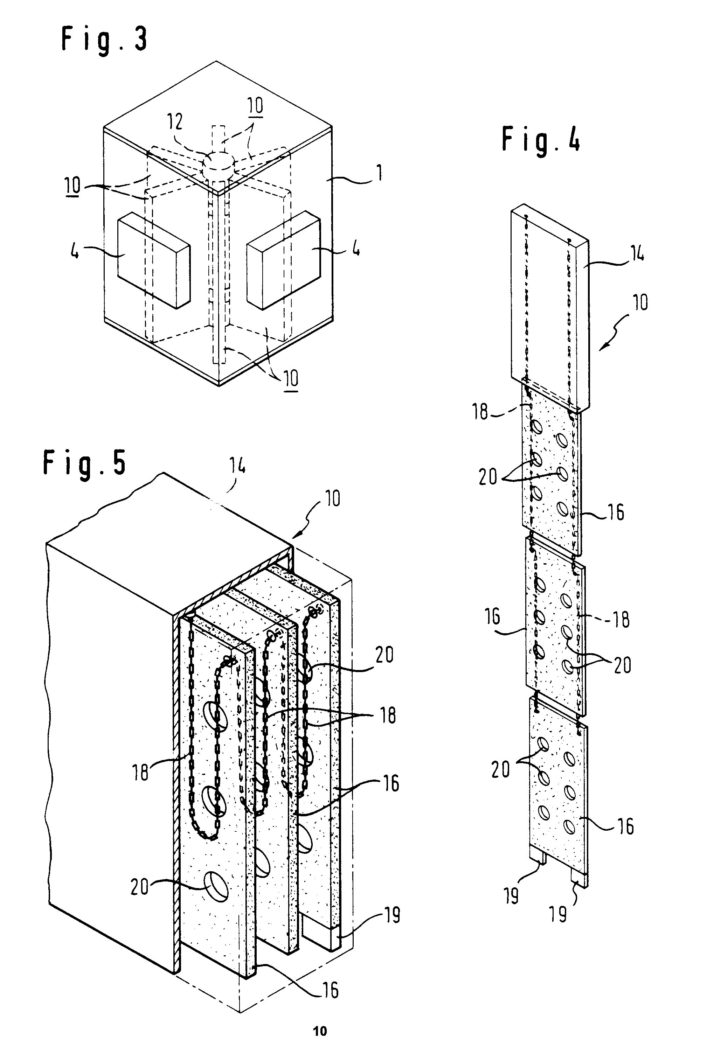

Fig. 3 zeigt mehrere Katalysatoranordnungen gemäß einer anderen Ausführungsform der Erfindung in einem Bereitschaftszustand in einem geschlossenen Behälter 1. Bei dieser Ausführungsform sind sechs Katalysatoranordnungen 10 nach Art der Flügel eines Schaufelrades sternförmig um eine zentrale Achse 12 herum angeordnet. Jede der Katalysatoranordnungen setzt sich aus einem Katalysatorgehäuse 14 und Katalysatorplatten 16 zusammen. Das Katalysatorgehäuse 14 selbst kann auch aus beidseitig beschichteten Katalysatorplatten aufgebaut sein. Es ist unten offen und enthält im Bereitschaftszustand, wie in Fig. 5 dargestellt ist, eine Anzahl der Katalysatorplatten, die untereinander über flexible Tragmittel, vorzugsweise Metallketten 18, verbunden sind. Eine der Katalysatorplatten ist über eine solche Metallkette 18 mit der Decke des Katalysatorgehäuses 14 verbunden. Die Metallketten sind jeweils am oberen Ende der Katalysatorplatten angebracht. Die jeweils zwei Katalysatorplatten untereinander verbindenden Metallketten sind etwas länger als die Katalysatorplatten selbst hoch sind. Die die eine Katalysatorplatte mit der Decke des Katalysatorgehäuses 14 verbindende Kette ist etwas länger als die Höhe des Katalysatorgehäuses. Die in der Folge der Ketten letzte Katalysatorplatte ist an ihrem unteren, der Metallkette 18 abgewandten Ende mit einem oder mehreren Gewichten 19 belastet. In dem in Fig. 3 gezeigten Bereitschaftszustand liegen die einzelnen Katalysatorplatten auf dem Boden des Gehäuses 1 auf, der in einem Störungsfall abfällt.

Wenn sich bei der beschriebenen Ausgestaltung der Katalysatoranordnung 10 das Behälter 1 in einem Störungsfall auf diese Weise öffnet, dann fallen die Katalysatorplatten aller Katalysatoranordnungen 10 aufgrund der von den Katalysatorplatten 16 und den Gewichten 19 ausgeübten Kraft nach unten in die in Fig. 4 für die eine Katalysatoranordnung 10 dargestellte Anordnung heraus. Aufgrund der beschriebenen Befestigungsstellen und der Länge der Metallketten 18 hängt die oberste, unmittelbar an das Katalysatorgehäuse 14 anschließende Katalysatorplatte 16 mit geringem Abstand unter der Unterseite des Katalysatorgehäuses 14. Die anderen Katalysatorplatten 16 folgen jeweils mit geringem Abstand auf die erste, so daß sich eine Kette von Katalysatorplatten in Vertikalrichtung ergibt. Bei den übrigen Katalysatoranordnungen 10 von Fig. 3 fallen die entsprechenden Katalysatorplatten in gleicher Weise heraus. Die Abmessungen der Katalysatorgehäuse 14 und der Katalysatorplatten 16 hängen von den jeweiligen Raumverhältnissen ab. Es ist auch denkbar, mehrere Vorrichtungen dieser Art innerhalb eines Raumes anzuordnen.

Die Katalysatorplatten 16 sind mit mehreren Löchern 20 versehen. Aufgrund dieser Löcher kommt es zur Ausbildung von Querströmen und damit insgesamt zu der räumlichen Konvektion, die erfindungsgemäß vorhandene Sperrschichten auflöst oder solche an der Bildung hindert.

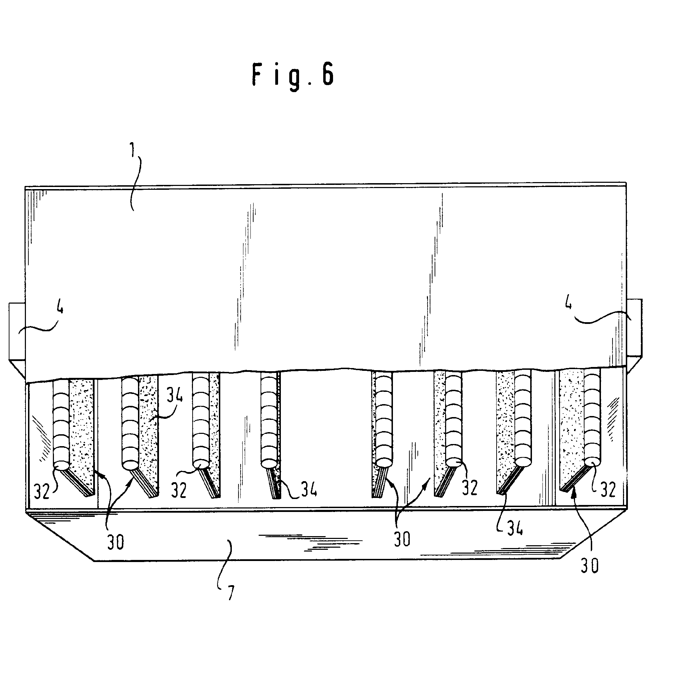

Ein drittes Ausführungsbeispiel soll nachfolgend unter Bezug auf die Fig. 6 bis 8 beschrieben werden. Fig. 6 zeigt eine Reihe von Katalysatoranordnungen 30 in einem Bereitschaftszustand innerhalb eines geschlossenen Behälters 1. Der Behälter 1 ist wie die Behälter der beiden vorangegangenen Ausführungsformen mit Zusatzbehältern 4 versehen, bezüglich derer auf die vorangegangene Beschreibung verwiesen werden kann.

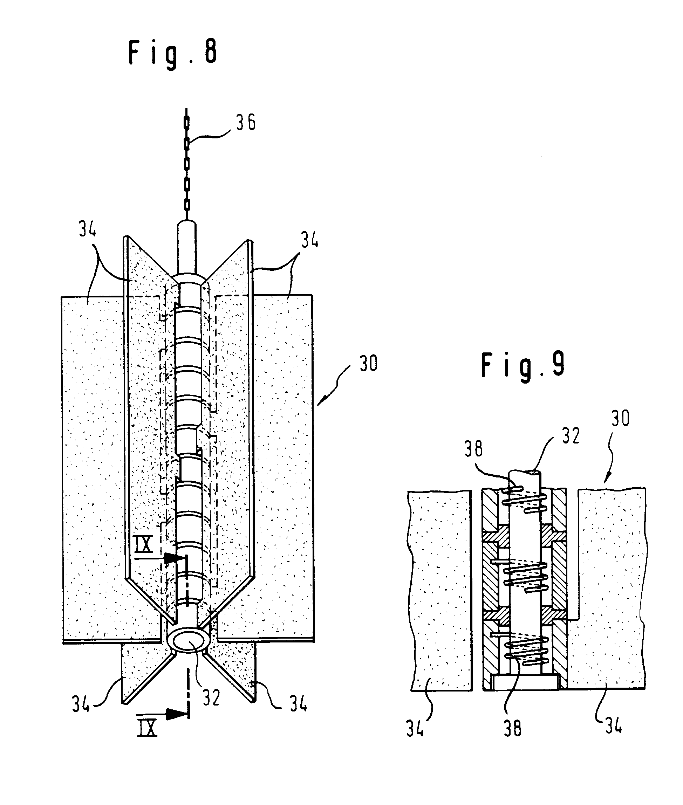

Bei den Katalysatoranordnungen 30 handelt es sich, wie am besten aus den Fign. 8 und 9 erkennbar, um schaufelradähnliche Gebilde mit einer zentralen Achse 32, an der einzelne Katalysatorplatten 34 jeweils mittels Buchsen drehbar angebracht sind. Die Katalysatorplatten 34 können so in Umfangsrichtung des Rohres aus der in Fig. 6 erkennbaren zusammengeklappten Stellung in die in Fig. 8 dargestellte sternförmige Stellung aufgefächert werden. Dies erlaubt eine kompakte Anordnung im Bereitschaftszustand bei gleichzeitig großer aktiver Oberfläche im Betriebszustand.

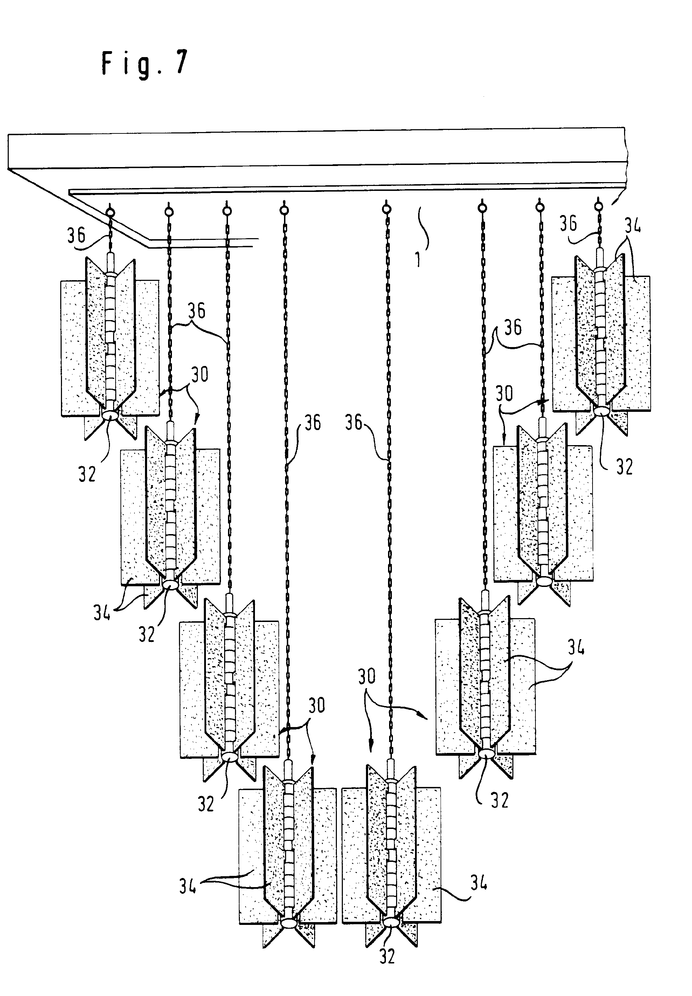

Im Störungsfall öffnet sich der Boden 7 des Behälters 1, woraufhin die einzelnen Katalysatoranordnungen 30 aufgrund der Schwerkraft aus dem Behälter 1 heraus nach unten fallen. Die Katalysatoranordnungen 30 sind über verschieden lange Metallketten 36 gemäß Darstellung in Fig. 7 an der Decke des Behälters 1 befestigt und bilden deshalb nach dem Herausfallen die in Fig. 7 dargestellte versetzte Anordnung der schaufelradartigen Gebilde. Das Aufklappen der Katalysatorplatten 34 der einzelnen Katalysatoranordnungen 30 wird von Drehfedern 38 (s. Fig. 9) bewirkt, die jeweils zwischen benachbarten Katalysatorplatten 34 vorgesehen sind. Durch geeignete Maßnahmen kann dafür gesorgt werden, daß die sich einstellenden Strömungen auf die einzelnen schaufelradartigen Gebilde ein Drehmoment ausüben, das zu einer zusätzlichen mechanischen Vermischung der Atmosphäre führt. Die Drehung kann entweder um die Metallketten 36 erfolgen, oder die die Katalysatorplatten 34 haltenden Achsen 32 können ihrerseits als um jeweilige Achsen drehbare Hülsen ausgebildet sein. Die Katalysatorplatten 34 können zur Ausbildung eines Drehmomentes mit Löchern versehen sein (ähnlich den Löchern 20 in Fig. 5), die zu Querströmungen führen, oder eine entsprechende Form oder schräge Anordnung aufweisen.

Durch geeignete mechanische Maßnahmen muß sichergestellt werden, daß beim Herausfallen der Katalysatoranordnungen 30 aus dem Behälter 1 im Störungsfall die an der längsten Metallkette hängende Katalysatoranordnung 30 zuerst fällt. Dies kann beispielsweise durch unterschiedliche Reibwiderstände an der Behälterwandung oder auch durch einen entsprechend geformten Boden, wie in Verbindung mit Fig. 1 erläutert, geschehen.

Es müssen auch nicht alle in einem zu schützenden Raum vorgesehenen Katalysatoranordnungen im Bereitschaftszustand in einem einzigen Behälter 1 untergebracht sein. Vielmehr können je nach den räumlichen Verhältnissen mehrere Behälter an verschiedenen Stellen angeordnet werden. Wichtig ist, daß im Störungsfall Katalysatoranordnungen über die Fläche und die Höhe des Raumes verteilt angeordnet sind, so daß die erwünschte räumliche Konvektion zur Durchmischung der Atmosphäre innerhalb des Raums entsteht.

Es sei ferner betont, daß es sich bei den erläuterten, mehr schematischen Ausführungsformen um wenige Bespiele aus einer Vielzahl von Möglichkeiten handelt.

## Patentansprüche

1. Vorrichtung zur Entfernung von Wasserstoff aus einem Wasserstoff und Sauerstoff enthaltenden Gasgemisch innerhalb eines im wesentlichen geschlossenen Raumes mit einer Katalysatoranordnung zur Oxidation von Wasserstoff, an der sich aufgrund der Reaktionswärme eine Konvektionsströmung einstellt,
dadurch **gekennzeichnet**, daß mehrere Katalysatoranordnungen (2) derart gegeneinander versetzt im Raum angeordnet sind, daß ihre Konvektionsströmungen eine Durchmischung der Atmosphäre innerhalb des Raumes bewirken.

2. Vorrichtung nach Anspruch 1, dadurch **gekennzeichnet**, daß die Katalysatoranordnungen Katalysatorplatten (2) umfassen, die aus beidseitig mit Katalysatorsubstanz beschichtetem Trägerblech bestehen.

3. Vorrichtung nach Anspruch 2, dadurch **gekennzeichnet**, daß mehrere Katalysatorplatten (2), horizontal im Abstand gehalten, an verschieden langen Tragmitteln (3) aufgehängt sind derart, daß zwei horizontal benachbarte Platten verschiedene Höhenlagen haben.

4. Vorrichtung nach Anspruch 3, dadurch **gekennzeichnet**, daß die Katalysatorplatten (2) mehrere in Vertikalrichtung beabstandete, sich horizontal in Plattenlängsrichtung erstreckende Durchbohrungen (9) aufweisen.

5. Vorrichtung nach einem der Ansprüche 3 oder 4, dadurch **gekennzeichnet**, daß die Katalysatorplatten (2) in einem Bereitschaftszustand mit Abständen im wesentlichen parallel nebeneinander in einem Behälter (1) gehalten werden, wobei sie über flexible Tragmittel (3) mit der Decke des Behälters verbunden sind und auf dem Behälterboden (7) aufliegen, und daß der Behälterboden im Bedarfsfall vom Rest des Behälters abtrennbar ist derart, daß die Katalysatorplatten in einen Betriebszustand jeweils nach Maßgabe der Länge des zugehörigen Tragmittels unter dem Einfluß der Schwerkraft nach unten fallen und sich horizontal und vertikal gegeneinander versetzt im Raum befinden.

6. Vorrichtung nach Anspruch 1 oder 2, dadurch **gekennzeichnet**, daß die Katalysatoranordnungen nach Art der Flügel eines Schaufelrades um eine zentrale Achse (12) herum angeordnete, nach unten offene Hohlquader (10) umfassen, die aus ersten Katalysatorplatten bestehen und in einem Bereitschaftszustand zweite Katalysatorplatten (16) enthalten, die mit flexiblen Tragmitteln (18) untereinander und mit dem Hohlquader verbunden sind, und daß die Hohlquader (10) jeweils im Bereitschaftszustand innerhalb eines gasdichten Behälters (1) in einer Schutzatmosphäre eingeschlossen sind derart, die zweiten Katalysatorplatten (16) bei im Bedarfsfall geöffnetem Boden des Behälters (1) unter dem Einfluß der Schwerkraft in einen Betriebszustand nach unten fallen und derart mittels der Tragmittel (18) verbunden sind, daß sie dabei in senkrechter Richtung eine Kette von Katalysatorplatten bilden.

7. Vorrichtung nach Anspruch 6, dadurch **gekennzeichnet**, daß die Katalysatorplatten (16) Löcher (20) aufweisen.

8. Vorrichtung nach Anspruch 1 oder 2, dadurch **gekennzeichnet**, daß jede der Katalysatoranordnungen als in Form von Flügeln eines Schaufelrades radial von einer zentralen Achse (32) abstehende Katalysatorplatten (34) ausgebildet ist.

9. Vorrichtung nach Anspruch 8, dadurch **gekennzeichnet**, daß die Katalysatorplatten (34) schwenkbar an der zentralen Achse (32) befestigt sind derart, daß sie aus einem Bereitschaftszustand, bei dem alle Katalysatorplatten im wesentlichen aneinandergeklappt sind, in einen Betriebszustand verschwenkbar sind, bei dem sie nach Art eines Schaufelrades sternförmig von der zentralen Achse abstehen.

10. Vorrichtung nach Anspruch 9, **gekennzeichnet**, durch zwischen den einzelnen Katalysatorplatten (34) angeordnete Federn (38), die die Katalysatorplatten in ihren Betriebszustand vorspannen.

11. Vorrichtung nach einem der Ansprüche 8 bis 10, dadurch **gekennzeichnet**, daß die einzelnen Katalysatoranordnungen im Bereitschaftszustand innerhalb eines oder mehrerer gasdichter Gehäuse untergebracht sind.

12. Vorrichtung nach einem der Ansprüche 8 bis 11, dadurch **gekennzeichnet**, daß die Katalysatorplatten (34) aerodynamisch so gestaltet und so angebracht sind , daß sich aufgrund der von der Katalysationswärme hervorgerufenen Strömung eine Drehung der einzelnen Schaufelräder einstellt.

## Claims

1. Apparatus for removing hydrogen from a gas mixture containing hydrogen and oxygen within a substantially closed space with a catalyst arrangement for the oxidation of hydrogen, at which a convection flow occurs as a result of the reaction heat, characterised in that a plurality of catalyst arrangements (2) are arranged in the space in mutually displaced relationship in such a way that their convection flows produce intermixing of the atmosphere within the space.

2. Apparatus as set forth in claim 1 characterised in that the catalyst arrangements include catalyst plates (2) comprising carrier sheet metal which is coated with catalyst substance on both sides.

3. Apparatus as set forth in claim 2 characterised in that a plurality of catalyst plates (2), held at a spacing in a horizontal direction, are suspended from support members (3) of different lengths, in such a way that two horizontally adjacent plates are at different positions in respect of height.

4. Apparatus as set forth in claim 3 characterised in that the catalyst plates (2) have a plurality of through bores (9) which are spaced in a vertical direction and which extend horizontally in the longitudinal direction of the plates.

5. Apparatus as set forth in one of claims 3 and 4 characterised in that the catalyst plates (2) are held in a readiness condition at spacings in substantially parallel juxtaposed relationship in a container (1), being connected to the top of the container by way of flexible support members (3) and lying on the container bottom (7), and that the container bottom can be separated if required from the rest of the container in such a way that the catalyst plates drop downwardly into an operable condition under the influence of the force of gravity in accordance with the respective length of the associated support member and are disposed in the space in mutually displaced relationship horizontally and vertically.

6. Apparatus according to claim 1 or claim 2 characterised in that the catalyst arrangements include downwardly open hollow parallelepipeds (10) which are arranged in the manner of the vanes of a vane impeller around a central axis (12) and which comprise first catalyst plates and which contain in a readiness condition second catalyst plates (16) which are connected to each other and to the hollow parallelepiped with flexible support members (18) and that the hollow parallelepipeds (10) are each enclosed in the readiness condition within a gas-tight container (1) in a protective atmosphere in such a way that the second catalyst plates drop downwardly into an operable condition under the influence of the force of gravity when the bottom of the container (1) is opened when required, and are connected by means of the support members (18) in such a way that in that situation they form a chain of catalyst plates in a vertical direction.

7. Apparatus as set forth in claim 6 characterised in that the catalyst plates (16) have holes (20).

8. Apparatus as set forth in claim 1 or claim 2 characterised in that each of the catalyst arrangements is in the form of catalyst plates (34) projecting radially from a central axis (32) in the form of vanes of a vane impeller.

9. Apparatus as set forth in claim 8 characterised in that the catalyst plates (34) are fixed pivotably on the central axis (32) in such a way that they are pivotable from a readiness condition in which all catalyst plates are folded substantially against each other into an operable condition in which they project in a star-like configuration from the central axis in the manner of an impeller.

10. Apparatus as set forth in claim 9 characterised by springs (38) which are disposed between the individual catalyst plates (34) and which bias the catalyst plates into their operable condition.

11. Apparatus as set forth in one of claims 8 to 10 characterised in that the individual catalyst arrangements are disposed in the readiness condition within one or more gas-tight housings.

12. Apparatus as set forth in one of claims 8 to 11 characterised in that the catalyst plates (34) are of such an aerodynamic configuration and are so mounted that a rotary movement of the individual impeller structures occurs as a result of the flow produced by the heat of catalysis.

## Revendications

1. Dispositif d'élimination de l'hydrogène, dans un mélange gazeux contenant de l'hydrogène et de l'oxygène, en particulier à l'intérieur d'une enceinte pratiquement fermée, avec un dispositif catalyseur destiné à effectuer l'oxydation de l'hydrogène, sur lequel s'établit un courant de convection, du fait de la chaleur de réaction, caractérisé en ce que plusieurs dispositifs catalyseurs (2) sont disposés dans l'enceinte, décalés les uns par rapport aux autres, de manière que leurs courants de convections provoquent un mélange intime de l'atmosphère à l'intérieur de l'enceinte.

2. Dispositif selon la revendication 1, caractérisé en ce que les dispositifs catalyseurs comprennent des plaques de catalyseur (2) composés de tôles support recouvertes sur les deux faces d'une substance à fonction de catalyseur.

3. Dispositif selon la revendication 2, caractérisé en ce que plusieurs plaques de catalyseur (2) sont maintenues horizontales à distance, accrochées sur des moyens support (3) de différentes longueurs, de manière à ce que deux plaque voisine horizontalement soient situées à des niveaux en hauteur différents.

4. Dispositif selon la revendication 3, caractérisé en ce que les plaques de catalyseur (2) présentent plusieurs pressages traversants (9), espacés en direction verticale et s'étendant horizontalement dans la direction longitudinale des plaques.

5. Dispositif selon l'une des revendications 3 ou 4, caractérisé en ce que les plaques de catalyseur (2) sont fixées, dans un état de disponibilité, suivant des espacements, les unes à côté des autres et sensiblement parallèlement, dans un récipient (1), en étant reliées au plafond du récipient, par l'intermédiaire de moyens supports (3) flexibles et repose sur le fond de récipient (7), et en ce que le fond de récipient est susceptible d'être séparé, en cas de besoin, du reste du récipient, de manière que les plaques de catalyseur se trouvent dans un moyen support afférent, en tombant vers le bas sous l'influence de la gravité et en étant décalées dans l'enceinte les unes par rapport aux autres, horizontalement et verticalement.

6. Dispositif selon la revendication 1 ou 2, caractérisé en ce que les dispositifs catalyseurs comprennent des cadres creux (10), ouverts vers le bas et composés de premières plaques de catalyseurs, disposées autour d'un axe central (12), a la façon des ailettes d'une roue à aubes, et contiennent, dans un état de disponibilité, des deuxièmes plaques de catalyseur (16) reliées ensemble et au cadre creux à l'aide de moyens supports (18) flexibles et en ce que le cadre creux (10) est enclôt chaque fois, à l'état de disponibilité, à l'intérieur d'un récipient (1) étanche au gaz, dans une atmosphère protectrice, de manière que les deuxièmes plaques de catalyseur (16), lorsque le fond du récipient est ouvert en cas de besoin, tombent vers le bas sous l'influence de la gravité, dans un état de fonctionnement et soient relié à l'aide des moyens support (18) de manière qu'elles constituent alors en direction verticale une chaîne de plaques de catalyseurs.

7. Dispositif selon la revendication 6, caractérisé en ce que les plaques de catalyseur (16) présentent des trous (20).

8. Dispositif selon la revendication 1 ou 2, caractérisé en ce que chacun des dispositifs catalyseur est réalisé sous la forme de plaques de catalyseur (34) faisant saillie, sous forme d'ailette d'une roue à aube, radialement, depuis un axe central (32).

9. Dispositif selon la revendication 8, caractérisé en ce que les plaques de catalyseur (34) sont fixées sur l'axe central (32), pour leur permettre de pivoter, de manière que, à partir d'un état de disponibilité dans lequel toutes les plaques de catalyseur sont sensiblement rabattues les unes contre les autres, elles puissent pivoter dans un état de fonctionnement, dans lequel elles se projettent en étoile depuis l'axe central, à la façon d'une roue à aubes.

10. Dispositif selon la revendication 9, caractérisé par des ressorts (38), disposés entre les différentes plaques de catalyseur (34), qui mettent en pré-contrainte les plaques de catalyseur vers leur état de fonctionnement.

11. Dispositif selon l'une des revendication 8 à 10 caractérisé en ce que les différents dispositifs catalyseur sont logés, à l'état d'attente, à l'intérieur d'un ou plusieurs carters, étanches au gaz.

12. Dispositif selon l'une des revendication 8 à 11 caractérisé en ce que les plaques de catalyseur (34) ont une forme aérodynamique et un montage tels qu'une rotation des différentes roues à aubes s'établit sous l'action de l'écoulement provoqué par la chaleur de la catalyse.
